# EUROPÄISCHE PATENTSCHRIFT

(11) **EP 3 368 201 B1**
(45) Veröffentlichungstag und Bekanntmachung des Hinweises auf die Patenterteilung: **19.02.2025**
(21) Anmeldenummer: 16809692.3
(22) Anmeldetag: 05.12.2016
(51) Int. Cl.: B29B 7/32, B29B 7/40, B29B 7/60, B29B 7/94, C09J 175/04, B01F 25/431, B01F 27/114, B01F 27/50, B01F 27/55

(54) **VERFAHREN ZUR KONFEKTIONIERUNG UND AUFTRAGUNG VON KLEBSTOFFEN**
METHOD FOR COMPOUNDING AND APPLYING ADHESIVES
PROCÉDÉ DE CONFECTIONNEMENT ET D'APPLICATION D'ADHÉSIFS

(30) Priorität: 11.12.2015 DE 102015224997
(43) Veröffentlichungstag der Anmeldung: 05.09.2018
(73) Patentinhaber: Henkel AG & Co. KGaA, 40589 Düsseldorf (DE); Homag Holzbearbeitungssysteme GmbH, 72296 Schopfloch (DE)
(72) Erfinder: HOFFMANN, Knut, 40593 Düsseldorf (DE); LOTZ, Jürgen, 65399 Kiedrich (DE); SCHMID, Johannes, 72181 Starzach Wachendorf (DE)
(86) Internationale Anmeldenummer: PCT/EP2016/079715
(87) Internationale Veröffentlichungsnummer: WO 2017/097693

(56) Entgegenhaltungen:
- EP-A1- 1 743 777
- EP-A1- 1 800 738
- WO-A1-2015/188991
- WO-A1-98/46694
- DD-A1- 153 605
- JÜRGEN SCHAWE: "Auswertung und Interpretation von Peaktemperaturen bei DSC-Kurven: Grundlagen", USERCOM, 1 January 2006 (2006-01-01), pages 1 - 9, XP055389481, Retrieved from the Internet <URL:https://www.mt.com/dam/mt_ext_files/Editorial/Simple/0/peaktemperaturentausercom23ds0609.pdf> [retrieved on 20170710]

## Beschreibung

Die Erfindung betrifft kontinuierliche Verfahren zur Konfektionierung und Auftragung von Klebstoffen dadurch gekennzeichnet, dass (i) eine Grundkomponente des Klebstoffs mit mindestens einem Zuschlagsstoff kontinuierlich gemischt wird um einen konfektionierten Klebstoff herzustellen; und (ii) der so konfektionierte Klebstoff auf ein Substrat aufgetragen wird.

Bei der Fertigung von Möbeln oder Möbelelementen werden größerflächige Platten eingesetzt, die auf Maß zugeschnitten werden und die an ihren schmalen Kanten mit einem Kantenband versehen werden. Das Kantenband wird dabei mittels eines Klebstoffs auf die Schmalseite der Platte geklebt. Dabei zeigt sich, dass die Anforderungen an den Klebstoff variieren und je nach Möbelelement und/oder Möbel und/oder Anwendungsfall und/oder Einsatzgebiet unterschiedliche Eigenschaften aufweisen sollte.

So wird bei der Möbel- oder Möbelelementfertigung üblicher Weise ein standardisierter Klebstoff verwendet, der bei allen Anwendungen und bei allen Möbelelementen eingesetzt wird. Dabei ist der Klebstoff aufgrund seiner Farbe bei manchen Farbkombinationen nur wenig sichtbar, wobei bei anderen Farbkombinationen des Möbels oder des Möbelelements der Klebstoff eher optisch nachteilig auffällt, weil seine Farbe eher nicht zu der Farbe des Möbels oder Möbelelements passt. Der Einsatz eines entsprechend eingefärbten Klebstoffs scheitert oft an den von einem Klebstoffhersteller abzunehmenden Klebstoffmengen, die nur bei sehr hohen zu verarbeitenden Stückzahlen rentabel eingekauft werden können.

Die EP 1 743 777 A1 offenbart eine Klebstoffauftragstation, die eine Zumischung von Farbstoffen zu dem Klebstoff erlaubt. Die offenbarte Klebstoffauftragstation hat jedoch den Nachteil, dass die mit ihr erzeugbaren Klebstoffmengen nur in einem diskontinuierlichen Betrieb erzeugt werden können. Die Mischung erfolgt dabei nach Zudosierung des Farbstoffs zu dem Klebstoff, wobei nach der Mischung des Klebstoffs das Mischaggregat entfernt wird und der Klebstoff durch Verlagerung des im Gehäuse der Station vorgesehenen Kolbens aus einem Austrittsschlitz gepresst wird. Nach dem Aufbrauchen des so erzeugten Klebstoffs muss neuer Klebstoff in die Station nachgefüllt, das Mischaggregat wieder eingesetzt und eine neue Charge des Klebstoffs erzeugt und gemischt werden. Diese Station eignet sich daher nicht für einen kontinuierlichen Betrieb im industriellen Maßstab zur Herstellung größerer Stückzahlen von Möbeln oder Möbelelementen.

Auch ist es oft der Wunsch, den Klebstoff an seinen Einsatzzweck hin oder bezüglich des Einsatzzweckes des Möbels gezielt anzupassen.

Es ist die Aufgabe der Erfindung, eine kontinuierliches Verfahren zur Konfektionierung und Auftragung von Klebstoffen zu schaffen, die eine Individualisierung von Klebstoffen erlaubt und dennoch auch für im Handwerksbereich einsetzbar ist oder auch für industriell bearbeitbare Mengen geeignet ist.

Diese Aufgabe wird mit den hierin beschriebenen Verfahren gelöst. In einem ersten Aspekt betrifft die Erfindung daher ein kontinuierliches Verfahren zur Konfektionierung und Auftragung einer Klebstoffzusammensetzung zur Verklebung von Spanplatten mit einem Kantenband, dadurch gekennzeichnet, dass
(i) eine Schmelzklebstoffzusammensetzung umfassend mindestens einen Zuschlagsstoff mit mindestens einem Farbpigment kontinuierlich gemischt wird, um einen konfektionierten Klebstoff herzustellen;
(ii) der so konfektionierte Klebstoff kontinuierlich auf ein Substrat aufgetragen wird, wobei es sich bei dem Substrat um eine Spanplatte handelt;
(iii) das Substrat mit einem zweiten Substrat verklebt wird, wobei es sich bei dem zweiten Substrat um ein Kantenband handelt,
dadurch gekennzeichnet, dass das mindestens eine Farbpigment in Schritt (i) derart ausgewählt und kontrolliert zugesetzt wird, dass die Farbe des so konfektionierten Klebstoffs dem Substrat angepasst wird, auf welches er in Schritt (ii) aufgetragen wird.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen, sondern auf die Art des Bestandteils. "Mindestens ein Polyol" bedeutet daher beispielsweise ein oder mehrere verschiedene Polyole, d.h. eine oder mehrere verschiedene Arten von Polyolen. Zusammen mit Mengenangaben beziehen sich die Mengenangaben auf die Gesamtmenge der entsprechend bezeichneten Art von Bestandteil, wie bereits oben definiert.

"kontinuierlich", wie hierin in Zusammenhang mit den beschriebenen Verfahren verwendet, bedeutet, dass die Verfahren kontinuierlich betrieben werden, d.h. dass das Mischen und Auftragen kontinuierlich erfolgen, insbesondere dass das Auftragen direkt nach dem Mischen/Konfektionieren in einem kontinuierlichen Prozess erfolgt.

Alle Prozentangaben beziehen sich, sofern nicht anders angegeben, auf Gewichts-% jeweils bezogen auf das Gesamtgewicht der entsprechenden Zusammensetzung.

Da der Klebstoff insbesondere zur Veredelung der Schmalseiten von Spanplatten mit einem Kantenband dient, kann das Verfahren auch einen weiteren Schritt (iii) nämlich das Verkleben des Substrats mit einem zweiten Substrat umfassen, um so ein Werkstück zu erhalten. Dieses zweite Substrat kann dabei ein Kantenband sein, das mit einer Spanplatte (dem ersten Substrat) verklebt wird. Die Auftragung des Klebstoffs auf das Substrat kann generell teilflächig, d.h. auf bestimmte Bereiche des Subastrats begrenzt, erfolgen. In den bevorzugten Ausführungsformen der Erfindung erfolgt die Auftragung auf die Schmalseite einer (Span-)Platte, wobei der Klebstoff auch auf die Schmalseite vollflächig oder nur teilflächig aufgetragen werden kann, wobei in letzterem Fall die komplette Benetzung der Schmalseitenfläche beim Verkleben mit einem Kantenband durch Andrücken erfolgen kann. Die so erhaltenen verklebten Substrate, d.h. insbesondere Spanplatten und Kantenbänder, die mittels der erfindungsgemäßen Verfahren hergestellt werden, werden hierin auch als "Werkstücke" bezeichnet.

In verschiedenen Ausführungsformen der Verfahren werden die Grundkomponente des Klebstoffs und/oder der mindestens eine Zuschlagsstoff in Schritt (i) kontrolliert zudosiert. Das ermöglicht die Anpassung des Klebstoffs über Art und Menge des Zuschlagsstoffs an den gewünschten Verwendungszweck bzw. an das verwendete Substrat, insbesondere im Hinblick auf Farbe, Aushärtungsgeschwindigkeit, Haftfestigkeit etc.

Die Grundkomponente des Klebstoffs ist eine Schmelzklebstoffzusammensetzung. "Grundkomponente", wie hierin verwendet, bedeutet, dass es sich um das eigentliche Bindemittel handelt. In verschiedenen Ausführungsformen ist die Grundkomponente bereits eine vollständige, direkt als solche einsetzbare Klebstoffzusammensetzung, die beispielsweise auch kommerziell bereits in dieser Form erhältlich sein kann. In diesem Fall kann der Zuschlagsstoff nur eine weitere Anpassung der Klebstoffzusammensetzung an den gewünschten Einsatzzweck bewirken, beispielsweise eine Farbanpassung. Alternativ kann der Zuschlagsstoff aber auch Bestandteile enthalten, die die Klebeeigenschaften beeinflussen. Entsprechende Zuschlagsstoffe werden unten im Detail beschrieben.

In verschiedenen Ausführungsformen ist die Grundkomponente des Klebstoffs eine Schmelzklebstoffzusammensetzung, die bei Raumtemperatur fest und bei erhöhter Temperatur flüssig ist. "Flüssig", wie hierin verwendet, bezeichnet bei der angegebenen Temperatur und Normaldruck (1013 mbar) fließfähige Zusammensetzungen. Die Schmelzklebstoffzusammensetzungen haben in verschiedenen Ausführungsformen Schmelztemperaturen im Bereich von 90 bis 300°C, insbesondere im Bereich von 120 bis 250°C, wobei die Schmelztemperatur auch abhängig vom eingesetzten Klebstoffsystem ist.

In verschiedenen Ausführungsformen können beispielsweise 1-Komponenten Reaktivklebstoffsysteme eingesetzt werden. Diese können beispielsweise feuchtigkeitsvernetzend sein. Solche Reaktivklebstoffe können beispielsweise auf Polyurethanbasis sein. Geeignete Klebstoffe sind unter dem Handelsnamen Technomelt PUR (Henkel AG & Co. KGaA, DE) erhältlich. Alternativ können auch aber andere Arten der Vernetzung eingesetzt werden. Ebenfalls möglich ist der Einsatz von 2K-Klebstoffen, die dann direkt vor oder in Schritt (i) miteinander gemischt werden. Alternativ kann es sich bei den eingesetzten Klebstoffgrundkomponenten um nicht-reaktive Schmelzklebstoffe handeln, d.h. insbesondere physikalisches härtende, thermoplastische Klebstoffsysteme. Solche Systeme sind im Stand der Technik ebenfalls bekannt und basieren insbesondere auf Polyolefinen.

Da vorzugsweise Schmelzklebstoffe eingesetzt werden, werden die Verfahren in verschiedenen Ausführungsformen derart durchgeführt, dass das Konfektionieren und/oder Auftragen des Klebstoffs bei erhöhter Temperatur, insbesondere bei einer Temperatur über dem Schmelzpunkt der Grundkomponente des Klebstoffs erfolgt. Die entsprechenden Temperaturbereiche sind die bereits oben im Zusammenhang mit den Schmelzklebstoffen offenbarten Bereiche. Bei Reaktivklebstoffen werden üblicherweise Temperaturen im Bereich von 100 bis 140°C eingesetzt, bei den nichtreaktiven thermoplastischen Klebstoffsystemen, häufig Temperaturen im Bereich von 150 bis 220°C. Generell werden die Temperaturen aber in Abhängigkeit des eingesetzten Klebstoffs und des Substrats gewählt. Dabei sind die Temperaturen so gewählt, dass der Klebstoff in einer für das Konfektionieren und Auftragen geeigneten Form vorliegt, gleichzeitig aber eine Zersetzung des Klebstoffs, nachteilige Einflüsse auf das Substrat und unnötiger Energieverbrauch minimiert werden. Der mindestens eine Zuschlagsstoff umfasst insbesondere einen Stoff, welcher die chemischen Eigenschaften, die biologischen Eigenschaften und/oder die physikalischen Eigenschaften des Klebstoffs beeinflusst. Chemische Eigenschaften schließen beispielsweise, ohne darauf beschränkt zu sein, die Haftung und/oder die Aushärtungsgeschwindigkeit ein. Biologische Eigenschaften schließen ein, ohne darauf beschränkt zu sein, biozide Eigenschaften und Widerstandsfähigkeiten gegen Schimmelpilzbildung, während physikalische Eigenschaften beispielsweise Viskosität, Rekristallisierungsverhalten und Farbe einschließen.

Der mindestens eine Zuschlagstoff umfasst mindestens ein Farbpigment; in verschiedenen Ausführungsformen umfasst der mindestens eine Zuschlagsstoff ein Mittel zur Verbesserung der Feuchtigkeitsresistenz oder der Resistenz gegen Schimmelpilzbildung, ein biozides Mittel, ein Additiv für eine verbesserte Energieaufnahme, einen Primer für eine verbesserte Verklebung, ein Mittel zur Beeinflussung der Rekristallisierung des Klebstoffs und/oder einen Reaktionsbeschleuniger, besonders bevorzugt ein Farbpigment und/oder ein Mittel zur Beeinflussung der Rekristallisierung des Klebstoffs. Diese aktiven Komponenten des Zuschlagsstoffs können mit einem Trägerstoff formuliert sein, der mit dem Klebstoffsystem kompatibel ist. So kann dieser Trägerstoff im Fall von Klebstoffen auf PU-Basis beispielsweise ein oder mehrere Polyole einschließen. Im Fall von thermoplastischen Klebstoffen, insbesondere solchen auf Polyolefinbasis, kann auch der Trägerstoff ein oder mehrere Polyolefine sein. Diesem Trägerstoff ist dann der aktive Inhaltsstoff des Zuschlagsstoffs, häufig ein Farbpigment oder eine Mischung von Farbpigmenten, beigemischt.

In verschiedenen Ausführungsformen ist der mindestens eine Zuschlagsstoff daher bei Raumtemperatur flüssig ist und umfasst mindestens ein bei Raumtemperatur flüssiges Polyol, mindestens ein Farbpigment und optional mindestens einen Reaktionsbeschleuniger.

In verschiedenen anderen Ausführungsformen ist der mindestens eine Zuschlagsstoff bei Raumtemperatur fest ist und umfasst mindestens ein bei Raumtemperatur festes Polyolefin und mindestens ein Farbpigment.

Der Zuschlagsstoff wird in verschiedenen Ausführungsformen verwendet, um die Farbe des Klebstoffs an das Werkstück anzupassen, beispielsweise um die Farbe einer Klebstofffuge an eine Holz- oder Spanplatte sowie das verwendete Kantenband, das auf die Schmalseite der Platte aufgeklebt wird, anzupassen.

Des Weiteren können Zusätze, die das Rekristallisierungsverhalten des Klebstoffs beeinflussen, die Nachbearbeitbarkeit in den sogenannten Nachbearbeitungszonen der eingesetzten Vorrichtungen, beispielsweise Kantenanleimmaschinen, derart positiv verändern, dass ein Schmieren in diesen Zonen vermieden wird.

Dementsprechend wird in bestimmten Verfahren der mindestens eine Zuschlagsstoff so gewählt, dass er mindestens ein Mittel zur Beeinflussung der Rekristallisierung des Klebstoffs umfasst welches in Schritt (i) derart ausgewählt und kontrolliert zugesetzt wird, dass die Nachbearbeitbarkeit des Werkstücks, welches aus dem Substrat auf das der Klebstoff in Schritt (ii) aufgetragen wird hergestellt wird, verbessert wird.

Reaktionsbeschleuniger können die Vernetzung von Reaktivklebstoffen beschleunigen, so dass die weitere Bearbeitung beschleunigt durchgeführt werden kann. Diese können daher in Schritt (i) ebenfalls derart ausgewählt und kontrolliert zugesetzt werden, dass die Vernetzung des Klebstoffs nach Schritt (ii) beschleunigt wird.

Die Zuschlagsstoffe werden der Grundkomponente des Klebstoffs in Mengen zugemischt, die dem beabsichtigten Verwendungszweck angepasst sind. Eine derartige Anpassung kann auch kontinuierlich, beispielsweise in Abhängigkeit der Art und/oder Farbe des Substrats erfolgen. Üblicherweise liegen die zugesetzten Mengen im Bereich von 0,01 bis 20 Gew.% bezogen auf das Gesamtgewicht des konfektionierten Klebstoffs, vorzugsweise im Bereich von 0,01 bis 10 Gew.%, noch bevorzugter 0,1 bis 5 Gew.%. Derartige Mengen ermöglichen eine einfache und kontrollierte Zudosierung ohne die Eigenschaften des Klebstoffs nachteilig zu beeinflussen. Zu den hierin beschriebenen Reaktivklebstoffen kann der Zusatzstoff in Form einer entsprechenden Formulierung beispielsweise in Mengen von 0 bis 2 Gew.-%, vorzugsweise 0,1 bis 2 Gew.-% zugegeben werden, bezogen auf das Gesamtgewicht des konfektionierten Klebstoffs. Zu den hierin beschriebenen nicht reaktiven Klebstoffen kann der Zusatzstoff in Form einer entsprechenden Formulierung beispielsweise in Mengen von 0 bis 5 Gew.-%, vorzugsweise 0,1 bis 5 Gew.-% zugegeben werden, bezogen auf das Gesamtgewicht des konfektionierten Klebstoffs.

Nach dem erfindungsgemäßen Verfahren wird der mindestens eine Zuschlagsstoff, der mindestens ein Farbpigment umfasst, in Schritt (i) derart ausgewählt und kontrolliert zugesetzt, dass die Farbe des so konfektionierten Klebstoffs wie gewünscht angepasst wird, beispielsweise an das Substrat angepasst wird, auf welches er in Schritt (ii) aufgetragen wird.

Das Substrat kann beispielsweise eine Holz- oder Spanplatte sein, wobei der Klebstoff verwendet wird, um Kantenbänder auf die Schmalseite aufzukleben und so zu veredeln, um ein fertiges Werkstück zu erhalten. Die Kantenbänder können aus Kunststoffen bestehen, wie z.B. ABS, PP oder ähnlichen, sowie aus papierbasierten Materialien.

Ein Ausführungsbeispiel der Erfindung betrifft ein Verfahren, in welchem eine Vorrichtung zur Konfektionierung und Auftragung von Klebstoff bereitgestellt wird, wobei die Vorrichtung eine Zuführeinheit, eine Konfektionierungseinheit, und eine Auftragseinheit umfasst, wobei die Zuführeinheit zur Zuführung einer Grundkomponente des Klebstoffs und/oder des mindestens einen Zuschlagsstoffes dient, wobei die Konfektionierungseinheit eine kontinuierliche Mischung der Grundkomponente des Klebstoffs mit den zugeführten Zuschlagsstoffen zu dem konfektionierten Klebstoff und eine kontinuierliche Förderung des konfektionierten Klebstoffs bewirkt, und wobei der so konfektionierte Klebstoff aus der Konfektionierungseinheit in die Auftragseinheit gefördert wird und von der Auftragseinheit auf ein Substrat applizierbar ist. Dadurch kann je nach benötigtem Klebstoff für das jeweilige zu bearbeitende Substrat der Klebstoff ausgehend von einer Grundkomponente mit auswählbaren Zuschlagsstoffen versehen und vermischt werden, so dass der derart erzeugte Klebstoff auf das Substrat aufgetragen werden kann. So kann vorteilhaft die Farbe mit Zuschlagsstoffen gewählt werden und es können zusätzlich oder alternativ auch die chemischen Eigenschaften und/oder die biologischen Eigenschaften und/oder die physikalischen Eigenschaften des Klebstoffs beeinflusst werden. So können biozide Eigenschaften beeinflusst werden, um Schimmelbildung zu reduzieren oder die Wasserresistenz kann verbessert werden. Auch können elektrische Eigenschaften gezielt beeinflusst werden.

Erfindungsgemäß ist es vorteilhaft, wenn die Zuführeinheit eine Dosiereinheit zur dosierten Zuführung der Grundkomponente und/oder zumindest eines Zuschlagsstoffes aufweist. So kann sowohl die Grundkomponente als auch der ausgewählte Zuschlagsstoff oder die ausgewählten Zuschlagsstoffe dosiert in den benötigten Mengen zugeführt werden. Alternativ kann auch nur die Grundkomponente dosiert zugeführt werden und die Zuschlagsstoffe können in einer vereinfachten Version manuell zugeführt werden.

Auch ist es alternativ vorteilhaft, wenn die Konfektionierungseinheit eine Dosiereinheit zur dosierten Zuführung zumindest eines Zuschlagsstoffes aufweist.

Alternativ ist es auch vorteilhaft, wenn die Zuführeinheit eine manuelle Zuführung der Grundkomponente und/oder zumindest eines Zuschlagsstoffes erlaubt oder eine solche Zuführung aufweist. Dadurch kann im einfachsten Falle eine manuelle Zuführung mittels der Zuführeinheit erfolgen, so dass nachfolgend eine entsprechende Mischung und Auftragung erfolgen kann.

Auch ist es vorteilhaft, wenn die Zuführeinheit eine gesteuerte Zuführung der Grundkomponente und/oder zumindest eines Zuschlagsstoffes erlaubt oder eine solche Zuführung aufweist. Dadurch kann in einer alternativen Ausgestaltung eine automatisierte gesteuerte Zuführung mittels der Zuführeinheit erfolgen, so dass nachfolgend eine entsprechende Mischung und Auftragung erfolgen kann.

Alternativ ist es auch vorteilhaft, wenn die Konfektionierungseinheit eine gesteuerte Zuführung der Grundkomponente und/oder zumindest eines Zuschlagsstoffes erlaubt oder eine solche Zuführung aufweist. So kann neben der Zuführung der Zuführeinheit auch eine spätere Zudosierung vorgenommen werden.

Dabei ist es auch vorteilhaft, wenn die Zuführeinheit und/oder die Konfektionierungseinheit zumindest eine Pumpe umfasst, welche eine kontinuierliche Zuführung oder Förderung der Grundkomponente bewirkt. Dabei kann für die Grundkomponente eine eigene Pumpe vorgesehen sein, welche auch für die Förderung des gemischten Klebstoffs dienen kann. Alternativ kann auch eine Pumpe für die Förderung des gemischten Klebstoffs vorgesehen sein. Auch kann es vorteilhaft sein, wenn für zumindest einen Zuschlagsstoff oder für mehrere Zuschlagsstoffe oder für jeden Zuschlagsstoff eine Pumpe vorgesehen ist. So kann die Pumpe beispielsweise als Zahnradpumpe oder als Injektor oder ähnliches ausgebildet sein.

Dabei ist es alternativ besonders vorteilhaft, wenn die Zuführeinheit und/oder die Konfektionierungseinheit eine Pumpe umfasst, welche eine kontinuierliche oder eine diskrete Zuführung zumindest eines Zuschlagsstoffs bewirkt. So kann der Zuschlagsstoff auf die gewünschte Mischung hin eindosiert werden.

Auch ist es vorteilhaft, wenn die Zuführeinheit und/oder die Konfektionierungseinheit eine Heizung zum Aufschmelzen der Grundkomponente und/oder zumindest eines Zuschlagsstoffes aufweist. So kann der Klebstoff als Schmelzklebstoff verarbeitet werden.

Auch ist es vorteilhaft, wenn die Konfektionierungseinheit eine Mischvorrichtung aufweist zum Mischen der Grundkomponente und/oder des zumindest einen Zuschlagsstoffes. Dadurch wird eine gute Homogenisierung des Klebstoffs als Mischung der Grundkomponente und der verwendeten Zuschlagsstoffe erreicht.

Besonders vorteilhaft ist es, wenn die Konfektionierungseinheit eine Mischvorrichtung mit einer Mischkammer aufweist zum Mischen der Grundkomponente und/oder des zumindest einen Zuschlagsstoffes.

Alternativ ist es vorteilhaft, wenn die Konfektionierungseinheit in der Mischkammer ein statisches oder dynamisches Mischmittel aufweist. Dadurch kann die Mischung des Klebstoffs verbessert werden und in kürzerer Zeit durchgeführt werden.

Dabei ist es besonders vorteilhaft, wenn das dynamische Mischmittel ein angetriebenes, wie insbesondere drehbares Mischmittel ist. So kann eine besonders effektive Mischung vorgenommen werden.

Auch ist es besonders vorteilhaft, wenn das statische Mischmittel ein feststehendes Mischmittel in der Mischkammer und/oder an einer Wandung der Mischkammer ist. Dadurch lässt sich eine besonders kostengünstige Lösung finden.

Auch ist es vorteilhaft, wenn das statische Mischmittel durch eine hohlzylindrische Kammer mit einem darin spiralförmig ausgebildeten Strömungsweg gebildet ist. Dadurch wird über die Länge des Strömungswegs eine gute Vermischung erreicht.

Auch ist es vorteilhaft, wenn der spiralförmig ausgebildete Strömungsweg durch eine in die hohlzylindrische Kammer eingefügte spiralförmige Wendel gebildet wird. So lässt sich das Mischmittel besonders einfach ausbilden. Ist die Wendel entnehmbar, so kann auch eine einfache Reinigung erfolgen.

Weiterhin ist es vorteilhaft, wenn das statische Mischmittel durch ein an der Wandung der Mischkammer angeordnete oder ausgebildete spiralförmige Wendel ausgebildet wird. Diese kann von der Wand abstehen oder in die Wand als Art Nut eingearbeitet sein. Dadurch wird eine spiralförmige Strömung bewirkt, die eine Mischung bewirkt.

Auch ist es vorteilhaft, wenn die Konfektionierungseinheit eine Verteilvorrichtung aufweist zum verteilten Einlassen der Grundkomponente und/oder zum verteilten Einlassen zumindest eines Zuschlagsstoffes in die Mischkammer. Dadurch wird bereits eine gute Voraussetzung für eine gute Vermischung erzielt, weil die Grundkomponente und/oder der zumindest eine Zuschlagsstoff vor der Vermischung bereits in der Mischkammer verteilt wird bzw. werden.

Dabei ist es auch vorteilhaft, wenn die Mischkammer eine Auslassöffnung aufweist, zum Auslassen des gemischten Klebstoffs in die Auftragseinheit. So kann der gemischte Klebstoff kontinuierlich aus der Konfektionierungseinheit ausgelassen werden, um die Auftragseinheit zu befüllen und um idealerweise einen kontinuierlichen Auftragsprozess zu erreichen.

Dabei ist es besonders vorteilhaft, wenn die Auftragseinheit Mittel zum Auftragen des Klebstoffs aufweist. So kann der Klebstoff gezielt auf das zu bearbeitende Substrat aufgebracht werden.

Besonders vorteilhaft ist es, wenn die Mittel zum Auftragen des Klebstoffs eine Düse und/oder eine Auftragswalze aufweist. So kann eine gezielte und dosierte Auftragung des Klebstoffs erfolgen.

Dabei ist es vorteilhaft, wenn die Auftragseinheit ein Reservoir aufweist zur Zwischenspeicherung einer definierten Menge des Klebstoffs. Dadurch wird erreicht, dass ein gewisser Klebstoffvorrat zur Verfügung gestellt wird, der aufgebracht werden kann, während beispielsweise die Konfektionierungseinheit befüllt wird oder ein Wechsel der Zuschlagsstoffe vorgenommen wird.

Bei einem besonders vorteilhaften Ausführungsbeispiel ist es zweckmäßig, wenn das Reservoir als Zuführeinheit und Konfektionierungseinheit dient.

Dabei ist es in einem vorteilhaften Ausführungsbeispiel zweckmäßig, wenn die Mischung im Reservoir aufgrund der Rotation der Auftragswalze erfolgt. So wird durch die Auftragswalze in der Klebstoffmenge im Reservoir eine Strömung erzeugt, die zur verbesserten Mischung beiträgt.

Weitere vorteilhafte Ausgestaltungen sind durch die nachfolgende Figurenbeschreibung und durch die Unteransprüche beschrieben. Es ist dabei selbstverständlich, dass Ausführungsformen, die hierin im Zusammenhang mit den erfindungsgemäßen Verfahren beschrieben werden in gleicher Weise auch auf die Vorrichtungen, die in diesen Verfahren eingesetzt werden, anwendbar sind und umgekehrt. So ist zum Beispiel die Art des Mischens, die oben im Kontext mit der Vorrichtung beschrieben wird auf das Verfahren anwendbar und die speziellen Zuschlagsstoffe die oben im Zusammenhang mit den Verfahren beschrieben werden, können auch im Kontext der Vorrichtung eingesetzt werden.

Nachstehend wird die Erfindung auf der Grundlage eines Ausführungsbeispiels anhand der Zeichnungen näher erläutert. Es zeigen:
- Fig. 1: ein erstes Ausführungsbeispiel einer Vorrichtung zur Konfektionierung und Auftragung von Klebstoff, die in den erfindungsgemäßen Verfahren eingesetzt werden kann,
- Fig. 2: ein weiteres Ausführungsbeispiel einer Vorrichtung zur Konfektionierung und Auftragung von Klebstoff, die in den erfindungsgemäßen Verfahren eingesetzt werden kann,
- Fig. 3: ein weiteres Ausführungsbeispiel einer Vorrichtung zur Konfektionierung und Auftragung von Klebstoff, die in den erfindungsgemäßen Verfahren eingesetzt werden kann,
- Fig. 4: eine Schnittansicht eines Ausführungsbeispiels einer Konfektionierungsvorrichtung,
- Fig. 5: eine Schnittansicht der Konfektionierungsvorrichtung nach Figur 4,
- Fig. 6: eine Schnittansicht eines weiteren Ausführungsbeispiels einer Konfektionierungsvorrichtung,
- Fig. 7: eine Schnittansicht der Konfektionierungsvorrichtung nach Figur 6,
- Fig. 8: eine Schnittansicht eines weiteren Ausführungsbeispiels einer Konfektionierungsvorrichtung, und
- Fig. 9: eine Schnittansicht der Konfektionierungsvorrichtung nach Figur 8.

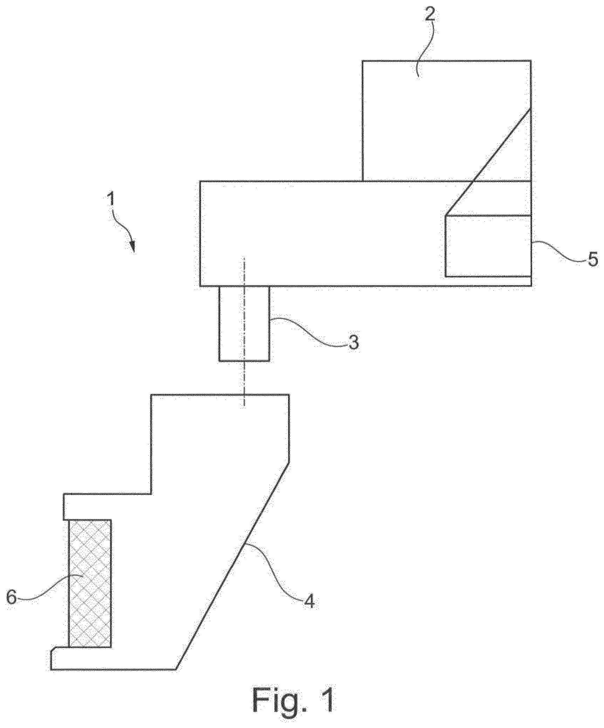

Die Figur 1 zeigt ein erstes Ausführungsbeispiel einer Vorrichtung 1 zur Konfektionierung und Auftragung von Klebstoff, mit einer Zuführeinheit 2, einer Konfektionierungseinheit 3 und einer Auftragseinheit 4, die in den erfindungsgemäßen Verfahren eingesetzt werden kann.

Die Zuführeinheit 2 dient der Zuführung der Grundkomponente des Klebstoffs, wobei die Grundkomponente des Klebstoffs bereits flüssig oder fluid zur Verfügung gestellt werden kann.

Auch kann die Grundkomponente des Klebstoffs als Feststoff, Granulat oder Pulver oder ähnliches zur Verfügung gestellt und in die Zuführeinheit 2 eingefüllt werden. Die Zuführeinheit 2 kann dazu eine Aufschmelzeinheit 5 aufweisen, welche dem Aufschmelzen der Grundkomponente dient. Von der Zuführeinheit 2 wird die Grundkomponente der Konfektionierungseinheit 3 zugeführt, der wiederum Zuschlagsstoffe zugeführt werden können.

Die Grundkomponente und der oder die Zuschlagsstoffe werden dann in der Konfektionierungseinheit 3 gemischt. Dazu kann ein nicht angetriebener rotierender Mischer, ein angetriebener rotierender Mischer oder ein statischer, sich nicht drehender Mischer in der Konfektionierungseinheit 3 vorgesehen sein, welcher die zu mischenden Komponenten in der Konfektionierungseinheit 3 mischt. Die gemischten Komponenten des Klebstoffs werden dann von der Konfektionierungseinheit 3 in die Auftragseinheit 4 geführt, von wo der Klebstoff auf ein Substrat aufgetragen werden kann. Dazu weist die Auftragseinheit 4 ein Mittel auf, mittels welchem der Auftrag auf das Substrat vorgenommen werden kann, wie beispielsweise eine Auftragswalze 6.

Die Zuführeinheit 2 kann aber auch der Zuführung der Grundkomponente des Klebstoffs und zumindest eines Zuschlagsstoffes dienen, so dass die Zuführeinheit 2 bereits die Grundkomponente und den zumindest einen Zuschlagsstoff zugeführt erhält und diese dann an die Konfektionierungseinheit weiterleitet, beispielsweise zur Mischung der Komponenten.

Die Zuführung der Grundkomponente zur Zuführeinheit und/oder zur Konfektionierungseinheit erfolgt dabei bevorzugt gesteuert automatisiert. In einem weiteren Ausführungsbeispiel der Erfindung kann die eine oder andere Komponente auch manuell zugeführt werden.

Die Konfektionierungseinheit 3 bewirkt eine kontinuierliche Mischung der Grundkomponente des Klebstoffs mit dem oder den zugeführten Zuschlagsstoffen zu dem konfektionierten Klebstoff und sie bewirkt auch eine kontinuierliche Förderung des konfektionierten Klebstoffs. Dazu weist die Konfektionierungseinheit bevorzugt eine Pumpe auf, welche die Grundkomponente oder den gemischten Klebstoff fördert. Wird nur die Grundkomponente von der Pumpe gefördert, so wird auch der gemischte Klebstoff gefördert, weil die Grundkomponente den Hauptteil des gemischten Klebstoffs ausmacht.

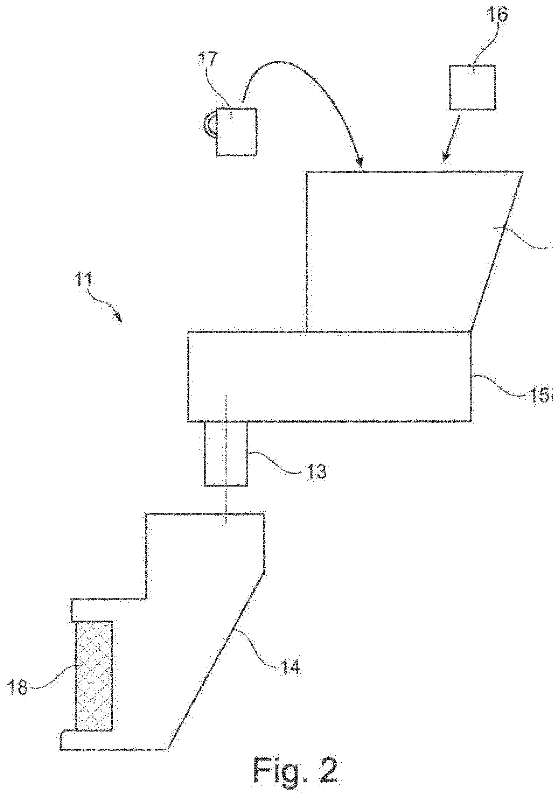

Die Figur 2 zeigt ein weiteres Ausführungsbeispiel einer erfindungsgemäßen Vorrichtung 11 zur Konfektionierung und Auftragung von Klebstoff, mit einer Zuführeinheit 12, einer Konfektionierungseinheit 13 und einer Auftragseinheit 14. Die Zuführeinheit 12 dient wieder der Zuführung der Grundkomponente 16 des Klebstoffs, wobei die Grundkomponente 16 des Klebstoffs, wie oben bereits ausgeführt, bereits flüssig oder fluid zur Verfügung gestellt werden kann. Auch kann die Grundkomponente 16 des Klebstoffs als Feststoff, Granulat oder Pulver oder ähnliches zur Verfügung gestellt und in die Zuführeinheit 12 eingefüllt werden. Die Zuführeinheit 12 kann dazu optional eine Aufschmelzeinheit 15 aufweisen, welche dem Aufschmelzen der Grundkomponente 16 dient. Von der Zuführeinheit 12 wird die Grundkomponente 16 der Konfektionierungseinheit 13 zugeführt, der optional auch Zuschlagsstoffe 17 zugeführt werden können. Alternativ können die Zuschlagsstoffe 17 auch der Zuführeinheit 12 zugeführt werden, wie es Figur 2 zeigt.

Die Grundkomponente 16 und der oder die Zuschlagsstoffe 17 werden dann in der Konfektionierungseinheit 13 gemischt. Dazu kann wiederum ein nicht angetriebener rotierender Mischer, ein angetriebener rotierender Mischer oder ein statischer, sich nicht drehender Mischer in der Konfektionierungseinheit 13 vorgesehen sein, welcher die zu mischenden Komponenten 16, 17 in der Konfektionierungseinheit 13 mischt. Die gemischten Komponenten 16, 17 des Klebstoffs werden dann von der Konfektionierungseinheit 13 in die Auftragseinheit 14 geführt, mittels welcher der Klebstoff auf ein Substrat aufgetragen werden kann. Dazu weist die Auftragseinheit 14 wiederum ein Mittel auf, mittels welchem der Auftrag des Klebstoffs auf das Substrat vorgenommen wird, wie beispielsweise eine Auftragswalze 18.

Wie es die Figur 2 zeigt, wird neben der Zuführung der Grundkomponente 16 des Klebstoffs auch zumindest ein Zuschlagsstoff über die Zuführeinheit 12 zugeführt, so dass die Zuführeinheit 12 bereits die Grundkomponente 16 und auch den zumindest einen Zuschlagsstoff 17 zugeführt erhält und diese dann an die Konfektionierungseinheit 13 weiterleitet, beispielsweise zur Mischung der Komponenten.

Die Zuführung der Grundkomponente 16 zur Zuführeinheit 12 und/oder zur Konfektionierungseinheit 13 erfolgt dabei bevorzugt gesteuert automatisiert. Alternativ kann die Grundkomponente 16 auch manuelle zugeführt werden. Die Zuschlagsstoffe 17 werden vorteilhaft manuell zugeführt. Alternativ können diese Zuschlagsstoffe 17 auch automatisiert zugeführt werden.

Die Konfektionierungseinheit 13 bewirkt wiederum eine kontinuierliche Mischung der Grundkomponente 16 des Klebstoffs mit dem oder den zugeführten Zuschlagsstoffen 17 zu dem konfektionierten Klebstoff und sie bewirkt auch eine kontinuierliche Förderung des konfektionierten Klebstoffs.

Dazu weist die Konfektionierungseinheit optional und bevorzugt eine nicht dargestellte Pumpe auf, welche die Grundkomponente oder den gemischten Klebstoff fördert. Wird nur die Grundkomponente von der Pumpe gefördert, so wird auch der gemischte Klebstoff gefördert, weil die Grundkomponente den Hauptteil des gemischten Klebstoffs ausmacht.

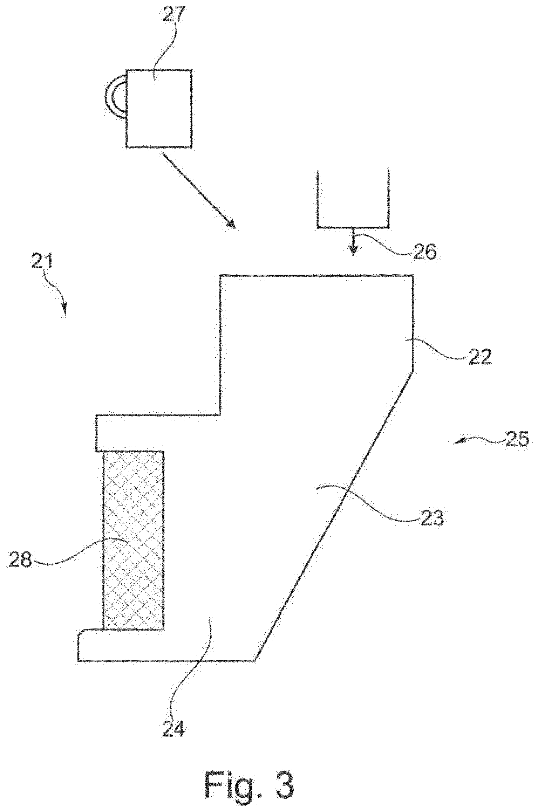

Die Figur 3 zeigt ein weiteres Ausführungsbeispiel der erfindungsgemäßen Vorrichtung 21 zur Konfektionierung und Auftragung von Klebstoff. Die Vorrichtung beinhaltet dabei eine Zuführeinheit 22, eine Konfektionierungseinheit 23 und einer Auftragseinheit 24, die alle in einem Gehäuse 25 bzw. in einem Gefäß integriert sind.

Die Zuführeinheit 22 dient wieder der Zuführung der Grundkomponente 26 des Klebstoffs, wobei die Grundkomponente 26 des Klebstoffs, wie oben bereits ausgeführt, bereits flüssig oder fluid zur Verfügung gestellt werden kann. Auch kann die Grundkomponente 26 des Klebstoffs alternativ als Feststoff, Granulat oder Pulver oder ähnliches zur Verfügung gestellt und in die Zuführeinheit 22 eingefüllt werden. Die Zuführeinheit 22 kann dazu optional eine Aufschmelzeinheit aufweisen, welche dem Aufschmelzen der Grundkomponente 26 dient, die in Figur 3 jedoch nicht gezeigt ist. Von der Zuführeinheit 22 wird die Grundkomponente 26 und der zumindest eine Zuschlagsstoff 27 der Konfektionierungseinheit 23 zugeführt. Die Grundkomponente 26 und der oder die Zuschlagsstoffe 27 werden dann in der Konfektionierungseinheit 23 gemischt.

Dazu kann wiederum ein nicht angetriebener rotierender Mischer, ein angetriebener rotierender Mischer oder ein statischer, sich nicht drehender Mischer in der Konfektionierungseinheit 23 vorgesehen sein, welcher die zu mischenden Komponenten 26, 27 in der Konfektionierungseinheit 23 mischt.

Als Mischer kann aber indirekt auch die Auftragswalze 28 dienen, die aufgrund ihrer Drehung in der Konfektionierungseinheit eine Strömung bewirkt, welche die Grundkomponente und den zumindest einen Zuschlagsstoff mischt.

Die gemischten Komponenten 26, 27 des Klebstoffs werden dann von der Auftragseinheit 24 abgeführt und mittels der Auftragswalze 28 auf ein Substrat appliziert.

Wie es die Figur 3 zeigt, wird neben der Zuführung der Grundkomponente 26 des Klebstoffs auch zumindest ein Zuschlagsstoff über die Zuführeinheit 22 zugeführt. Die Zuführung der Grundkomponente 26 zur Zuführeinheit 22 erfolgt dabei bevorzugt manuell, wobei dies alternativ auch gesteuert vorgenommen werden kann. Die Zuschlagsstoffe 27 werden vorteilhaft manuell zugeführt. Alternativ können diese Zuschlagsstoffe 27 auch automatisiert zugeführt werden.

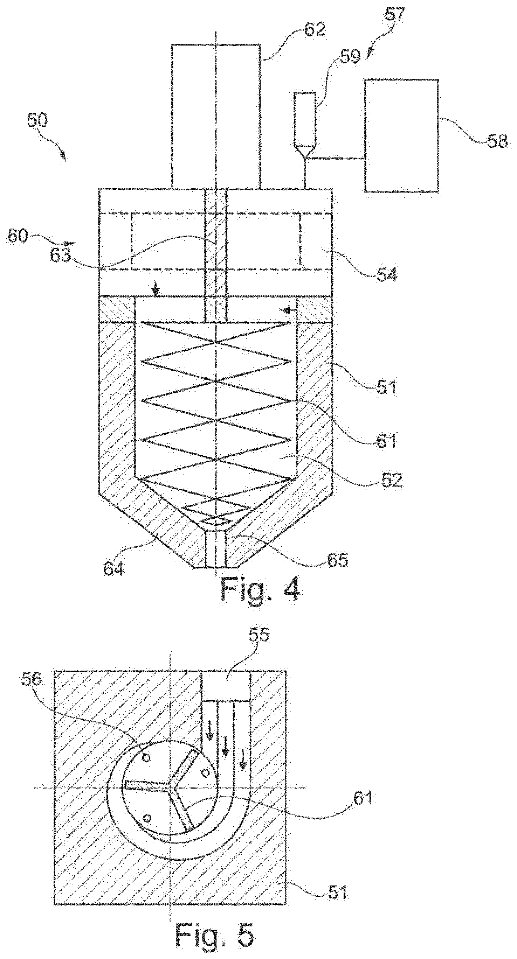

Die Figuren 4 bis 6 zeigen Ausführungsbeispiele von Konfektionierungseinheiten, die mit unterschiedlichen Mischern ausgebildet sind.

Die Figur 4 zeigt eine Konfektionierungseinheit 50 mit einem Gehäuse 51, in welcher ein Volumen 52 als Mischkammer ausgebildet ist. Im oberen Bereich 53 des Gehäuses 51 ist eine Pumpe 54 vorgesehen, welche die Förderung der Grundkomponente und/oder des Zuschlagsstoffs oder der Zuschlagsstoffe in die Mischkammer 52 des Gehäuses 51 bewirkt. Dazu wird die Grundkomponente über eine Zuführung 55 mit Eingängen 56 zur Mischkammer in die Mischkammer 52 eingelassen, siehe Figur 5. Die Zuführung 55 bewirkt über die spiralige Kanalführung eine Verteilung der Grundkomponente in der Mischkammer 52. Hierfür sind im Ausführungsbeispiel drei Kanäle gebildet, welche die Grundkomponente über einen Winkel von etwa 120° in die Mischkammer einlassen, wobei die Eingänge 56 jeweils um 120° versetzt angeordnet sind. Die Pumpe 54 kann vorzugsweise eine Zahnradpumpe sein.

Die Pumpe 54 dient als eine Dosiereinheit zur dosierten Zuführung der Grundkomponente in den Mischraum 52.

Weiterhin ist eine Dosiereinheit 57 vorgesehen, welche die Zudosierung zumindest einer Zuschlagskomponente bewirkt. Die Dosiereinheit 57 kann dazu ein Reservoir 58 und ein Ventil 59 aufweisen, so dass durch die Ansteuerung des Ventils 59 die Zudosierung vorgenommen wird. Dazu kann die Pumpe 54 genutzt werden, um den Zuschlagsstoff in die Mischkammer 52 zu fördern. Alternativ kann die Dosiereinheit 57 auch eine eigene Pumpe oder einen Injektor aufweisen, mittels welchem der zumindest eine Zuschlagsstoff in die Mischkammer 52 eindosiert wird.

Das Gehäuse 51 ist vorteilhaft beheizbar, damit eine geschmolzene Grundkomponente und/oder auch ein geschmolzener Zuschlagsstoff weiterhin geschmolzen weiterverarbeitet werden kann.

Die Konfektionierungseinheit 50 weist eine Mischvorrichtung 60 auf, zum Mischen der Grundkomponente und/oder des zumindest einen Zuschlagsstoffes. Dazu ist in der Mischkammer 52 ein drehbares Mischelement 61 angeordnet, welches zum Mischen der Grundkomponente und/oder des zumindest einen Zuschlagsstoffes von einem Antriebsmotor 62 mittels der Welle 63 angetrieben werden kann. Das Mischelement 61 ist entsprechend ein dynamisches Mischmittel, welches gesteuert verdreht werden kann. Der Antriebsmotor 62 ist dabei bevorzugt ein Elektromotor oder ein anderweitig angetriebener Motor. Der Motor 62 kann neben dem Antrieb des Mischelements 61 auch dem Antrieb der Pumpe 54 dienen. Dadurch würde ein Antrieb wegfallen, weil ein Antrieb für zwei Zwecke gleichzeitig genutzt werden könnte. Der Antriebsmotor 62 kann alternativ oder zusätzlich auch zum Antrieb der Pumpe für die Förderung der Zuschlagsstoffe vorgesehen werden.

Die Mischkammer 52 weist bevorzugt an ihrer Unterseite 64 eine Öffnung 65 auf, mittels welcher der gemischte Klebstoff aus der Konfektionierungseinheit 50 ausgelassen werden kann.

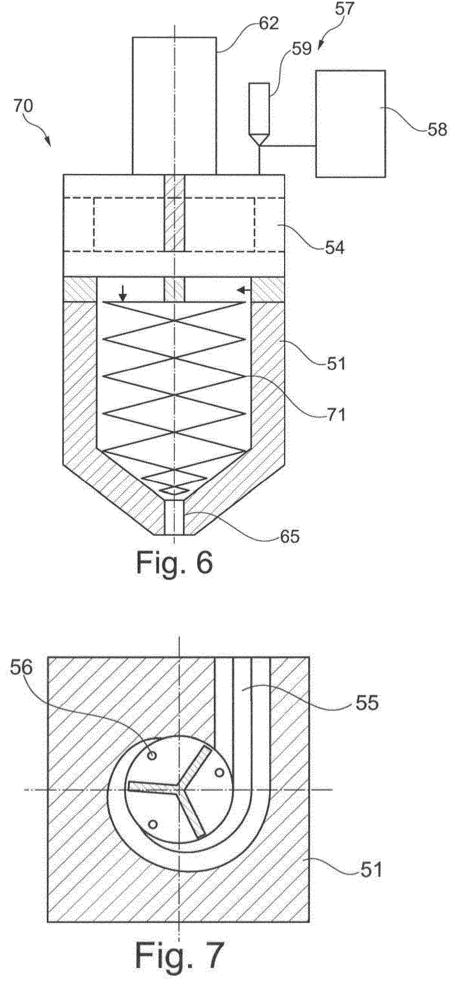

Die Figuren 6 und 7 zeigen ein weiteres Ausführungsbeispiel einer erfindungsgemäßen Konfektionierungseinheit 70, die im Wesentlichen ähnlich der Konfektionierungseinheit 50 der Figuren 4 und 5 ausgebildet ist.

Im Unterschied zur dem Beispiel der Figuren 4 und 5 ist die Vorrichtung 70 mit einem nicht angetriebenen Mischelement 71 versehen, welches zwar in der Mischkammer 52 drehbar gelagert ist, jedoch nicht von dem Antrieb 62 antreibbar ausgebildet ist. Die Welle 63 treibt das Mischelement 71 nicht an. Das Mischelement 71 kann sich jedoch aufgrund der Strömung des Klebstoffs in der Mischkammer drehen und mischt damit den Klebstoff bestehend aus Grundkomponente und/oder aus zumindest einem Zuschlagsstoff.

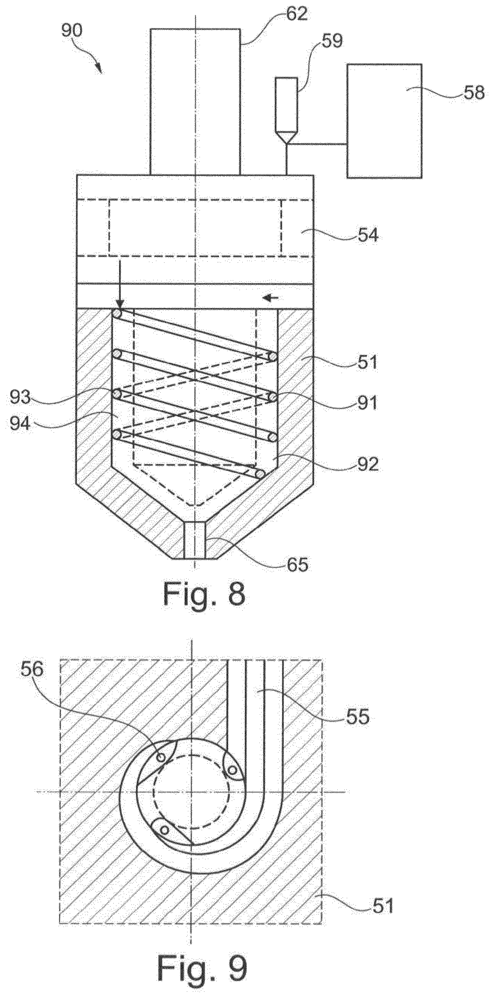

Die Figuren 8 und 9 zeigen ein weiteres Ausführungsbeispiel einer Konfektionierungseinheit 90, die im Wesentlichen ähnlich der Konfektionierungseinheit 50 der Figuren 4 und 5 ausgebildet ist und die ebenfalls in den erfindungsgemäßen Verfahren eingesetzt werden kann

Im Unterschied zur dem Beispiel der Figuren 4 und 5 ist die Vorrichtung 90 mit einem statischen Mischer 91 ausgebildet. Der statische Mischer 91 besteht aus einem Hohlzylinder 92, in welchem eine Wendel 93 eingelegt ist, um einen spiralförmigen Strömungspfad 94 zu bilden. Die fluide Grundkomponente und die Zuschlagsstoffe strömen entlang des Strömungswegs und vermischen sich dort.

Der Mischer 91 ist somit ein statisches Mischmittel, welches als ein feststehendes Mischmittel in der Mischkammer bzw. an einer Wandung der Mischkammer ausgebildet ist. die Mischkammer ist dazu zu einem spiralförmigen Strömungsweg verändert, der durch eine hohlzylindrische Kammer mit einem darin spiralförmig ausgebildeten Strömungsweg gebildet ist.

### Bezugszeichenliste

- 1: Vorrichtung
- 2: Zuführeinheit
- 3: Konfektionierungseinheit
- 4: Auftragseinheit
- 5: Aufschmelzeinheit
- 6: Auftragswalze
- 11: Vorrichtung
- 12: Zuführeinheit
- 13: Konfektionierungseinheit
- 14: Auftragseinheit
- 15: Aufschmelzeinheit
- 16: Grundkomponente
- 17: Zuschlagsstoff
- 18: Auftragswalze
- 21: Vorrichtung
- 22: Zuführeinheit
- 23: Konfektionierungseinheit
- 24: Auftragseinheit
- 25: Gehäuse
- 26: Grundkomponente
- 27: Zuschlagsstoff
- 28: Auftragswalze
- 50: Konfektionierungseinheit
- 51: Gehäuse
- 52: Volumen, Mischkammer
- 53: oberer Bereich
- 54: Pumpe
- 55: Zuführung
- 56: Eingang
- 57: Dosiereinheit
- 58: Reservoir
- 59: Ventil
- 60: Mischvorrichtung
- 61: Mischelement
- 62: Antriebsmotor
- 63: Welle
- 64: Unterseite
- 65: Öffnung
- 70: Konfektionierungseinheit
- 71: Mischelement
- 90: Konfektionierungseinheit
- 91: Mischer
- 92: Hohlzylinder
- 93: Wendel
- 94: Strömungspfad

### Beispiele

### Beispiel 1:

Als Klebstoffgrundkomponente wurde Technomelt PUR 270/7 (Henkel AG & Co. KGaA, DE) eingesetzt, in welchen Farbpasten in Gelb, Magenta und Blau in Mengen von je 0,1, 0,5 oder 1,0 Gew.-% bezogen auf das Gesamtgewicht des Klebstoffs eingerührt wurden. Dazu wurde die Klebstoffgrundkomponente in einem Umluftofen für 45 Minuten bei 140°C aufgeschmolzen. 200g davon wurden in einen Reaktor überführt (160°C) und die Farbpaste hinzugefügt und für 10 Minuten im Vakuum gerührt.

Von den derart konfektionierten Klebstoffen wurde eine optische Bewertung durchgeführt, die Viskosität (Brookfield, Spindel 28, 150°C, 5 rpm) bestimmt und ein Oszillationsversuch am Rheometer durchgeführt, aus dem die Temperatur des Crossovers von Speicher- und Verlustmodul (tan δ = 1) sowie die Temperatur, bei welcher der Speichermodul G` den Wert 10⁶ Pa erreicht, ausgewertet wird. Die Ergebnisse sind in Tabelle 1 dargestellt.

**Tabelle 1:**

| Viskosität (Pas) | 0% Farbpaste | 0,1 % Farbpaste | 0,5 % Farbpaste | 1,0% Farbpaste |
|---|---|---|---|---|
| Gelbpaste | 34 | 40 | 44 | 47 |
| Magentapaste | 34 | 40 | 43 | 46 |
| Blaupaste | 34 | 40 | 42 | 46 |
| | | | | |
| T [°C] wenn tan (δ)= 1,00 | | | | |
| Gelbpaste | 49,3 | 50,4 | 52,4 | 53,3 |
| Magentapaste | 49,3 | 53,4 | 55,4 | 56,4 |
| Blaupaste | 49,3 | 54,4 | 55,4 | 56,4 |
| | | | | |
| T [°C] wenn G' = 1000000 Pa | | | | |
| Gelbpaste | 46,0 | 46,3 | 47,3 | 47,3 |
| Magentapaste | 46,0 | 48,4 | 49,0 | 49,4 |
| Blaupaste | 46,3 | 49,4 | 49,4 | 50,4 |

### Beispiel 2:

Als Klebstoffgrundkomponente wurde wiederum Technomelt PUR 270/7 (Henkel AG & Co. KGaA, DE) eingesetzt, in welchen eine Farbpasten in Schwarz in Mengen von 1, 2, 3 oder 5 Gew.-% bezogen auf das Gesamtgewicht des Klebstoffs eingerührt wurden. Dazu wurde die Klebstoffgrundkomponente in einem Umluftofen für 45 Minuten bei 140°C aufgeschmolzen. 200g davon wurden in einen Reaktor überführt (160°C) und die Farbpaste hinzugefügt und für 10 Minuten im Vakuum gerührt.

Von den derart konfektionierten Klebstoffen wurden die Viskosität (Brookfield, Spindel 28, 150°C, 5 rpm), die Anfangsfestigkeit, der Festigkeitsaufbau, die Viskositäts- und Farbstabilität bei Auftragstemperatur bestimmt und ein Oszillationsversuch am Rheometer durchgeführt, aus dem die Temperatur des Crossovers von Speicher- und Verlustmodul (tan δ = 1) sowie die Temperatur, bei welcher der Speichermodul G` den Wert 10⁶ Pa erreicht, ausgewertet wird. Die Ergebnisse sind in Tabelle 2 dargestellt.

**Tabelle 2:**

| Nach 2 h | 270-7 | 270-7 + 1% Schwarzpaste | 270-7 + 2% Schwarzpaste | 270-7 + 3% Schwarzpaste | 270-7 + 5% Schwarzpaste |
|---|---|---|---|---|---|
| EMod [N/mm²] | 42 | 40 | 43 | 48 | 41 |
| σ - max [N/mm²] | 2,2 | 1,9 | 2,2 | 2,7 | 3,1 |
| ε-Bruch[%] | - | 43 | 134 | 127 | 538 |
| Nach 2 Tagen | | | | | |
| EMod [N/mm²] | 85 | 89 | 85 | 83 | 56 |
| σ- max [N/mm²] | 7,9 | 18,4 | 16,9 | 15,9 | 13,0 |
| ε-Bruch[%] | 842 | 752 | 822 | 768 | 907 |
| Nach 7 Tagen | | | | | |
| EMod [N/mm²] | 116 | 99 | 79 | 94 | 63 |
| σ- max [N/mm²] | 21,5 | 14,2 | 14,7 | 19,1 | 13,4 |
| ε-Bruch[%] | 922 | 599 | 675 | 759 | 851 |
| | | | | | |
| Viskosität [Pas] | | | | | |
| Nach dem Mischen | 29 | 45 | 54 | 58 | 153 |
| Nach 1 h | 36 | 46,2 | 57,2 | 64,4 | 183 |
| Nach 2 h | 41,3 | 50,1 | 68,7 | 77,8 | 212 |
| Nach 3 h | 45,3 | 54,6 | 78,4 | 88,8 | 251 |

**Tabelle 3**

| | 0% Farbpaste | 0,1% Farbpaste | 0,5% Farbpaste | 1,0% Farbpaste | 5,0% Farbpaste |
|---|---|---|---|---|---|
| Viskosität (Pas) | 29 | 45 | 54 | 58 | 153 |
| T [°C] wenn tan (δ)= 1,00 | 49,4 | 50,4 | 57,5 | 55,4 | 63,5 |
| T [°C] wenn G' = 1000000 Pa | 45,6 | 46,3 | 45,3 | 45,3 | 46,3 |

### Beispiel 3:

Eine Klebstoffgrundkomponente (Technomelt PUR 270/7, Henkel AG & Co. KGaA, DE) wurde mit einer Farbpaste wie in den Beispielen 1 und 2 beschrieben mittels einer HOMAG POWERLINE KRF 620 Kantenanleimmaschine mit einer Auftragungswalze (Nordson MC Series) und einer Schmelzvorrichtung (Nordson MC Series) auf die gerade Kante einer Spanplatte (IKEA 19,00 mm Höhe) aufgetragen und dann ein ABS-Kantenband (Fa. Giplast Sincro, Sitech) mit einer Dicke von 0,9 mm aufgeklebt. Die Bedingungen waren wie folgt:

### Bedingungen A:

- Temperaturen: Vorschmelzer: 130°C, Schlauch: 130°C, Kopf: 140°C; Walze: 144°C
- Nordson Vorschmelzer Pumpe: 80 rpm
- Pumpe des Mischkopfs für den Zuschlagsstoff: 3 rpm (Umdrehungen pro Minute, UpM)
- in ca. 3h konnten 80-100 Platte ohne Probleme hergestellt werden
- kein Fädenziehen, kein Verschmieren, geschlossene Klebefuge
- sehr hohe Anfangshaftung

### Bedingungen B:

- Temperaturen: Vorschmelzer: 130°C, Schlauch: 140°C, Kopf: 140°C
- Nordson Vorschmelzer Pumpe: 80 rpm
- Pumpe des Mischkopfs für den Zuschlagsstoff: 2,8 rpm
- 4 Probenkartuschen wurden gefüllt

### Bedingungen C:

- Temperaturen: Vorschmelzer: 130°C, Schlauch: 140°C, Kopf: 140°C
- Nordson Vorschmelzer Pumpe: 80 rpm
- Pumpe des Mischkopfs für den Zuschlagsstoff: 2,4 rpm
- 4 Probenkartuschen wurden gefüllt

Ein weiteres Verringern der Leistung der Pumpe des Mischkopfs für den Zuschlagsstoff führte zu ungefärbtem Klebstoff. Es wurde beobachtet, dass sich die gefärbten Klebstoffe genauso gut verarbeiten ließen, wie der Klebstoff ohne Zuschlagsstoff.

## Patentansprüche

1. Kontinuierliches Verfahren zur Konfektionierung und Auftragung einer Klebstoffzusammensetzung zur Verklebung von Spanplatten mit einem Kantenband, **dadurch gekennzeichnet, dass**
(i) eine Schmelzklebstoffzusammensetzung umfassend mindestens einen Zuschlagsstoff mit mindestens einem Farbpigment kontinuierlich gemischt wird, um einen konfektionierten Klebstoff herzustellen;
(ii) der so konfektionierte Klebstoff kontinuierlich auf ein Substrat aufgetragen wird, wobei es sich bei dem Substrat um eine Spanplatte handelt;
(iii) das Substrat mit einem zweiten Substrat verklebt wird, wobei es sich bei dem zweiten Substrat um ein Kantenband handelt,
**dadurch gekennzeichnet, dass** das mindestens eine Farbpigment in Schritt (i) derart ausgewählt und kontrolliert zugesetzt wird, dass die Farbe des so konfektionierten Klebstoffs dem Substrat angepasst wird, auf welches er in Schritt (ii) aufgetragen wird.

2. Verfahren nach Anspruch 1, **dadurch gekennzeichnet, dass** die Schmelzklebstoffzusammensetzung und/oder das mindestens eine Farbpigment in Schritt (i) kontrolliert zudosiert werden.

3. Verfahren nach Anspruch 1 oder 2, **dadurch gekennzeichnet, dass** die Schmelzklebstoffzusammensetzung
(i) ein 1-Komponenten Reaktivklebstoffsystem, vorzugsweise feuchtigkeitsvernetzend; oder
(ii) ein physikalisches härtendes, thermoplastisches Klebstoffsystem ist.

4. Verfahren nach einem der Ansprüche 1-3, **dadurch gekennzeichnet, dass** das Konfektionieren und/oder Auftragen des Klebstoffs bei erhöhter Temperatur, insbesondere bei einer Temperatur über dem Schmelzpunkt der Schmelzklebstoffzusammensetzung erfolgt

5. Verfahren nach einem der Ansprüche 1-5, **dadurch gekennzeichnet, dass** der mindestens eine Zuschlagsstoff:
(i) bei Raumtemperatur flüssig ist und mindestens ein bei Raumtemperatur flüssiges Polyol, mindestens ein Farbpigment und optional mindestens einen Reaktionsbeschleuniger umfasst; oder
(ii) bei Raumtemperatur fest ist und mindestens ein bei Raumtemperatur festes Polyolefin und mindestens ein Farbpigment umfasst.

6. Verfahren nach einem der Ansprüche 1-5, **dadurch gekennzeichnet, dass** in dem Verfahren eine Vorrichtung eingesetzt wird, die umfasst:
- eine Zuführeinheit,
- eine Konfektionierungseinheit,
- eine Auftragseinheit,
wobei die Zuführeinheit zur Zuführung der Schmelzklebstoffzusammensetzung und/oder dem mindestens einen Farbpigment dient,
wobei die Konfektionierungseinheit eine kontinuierliche Mischung Schmelzklebstoffzusammensetzung mit dem mindestens einen zugeführten Farbpigment zu dem konfektionierten Klebstoff und eine kontinuierliche Förderung des konfektionierten Klebstoffs bewirkt, wobei der so konfektionierte Klebstoff aus der Konfektionierungseinheit in die Auftragseinheit gefördert wird und von der Auftragseinheit auf ein Substrat applizierbar ist,
wobei die Zuführeinheit und/oder die Konfektionierungseinheit eine Heizung aufweist

7. Verfahren nach Anspruch 6, **dadurch gekennzeichnet, dass**
(i) die Zuführeinheit eine Dosiereinheit zur dosierten Zuführung der Schmelzklebstoffzusammensetzung und/oder des mindestens einen Farbpigments aufweist oder die Konfektionierungseinheit eine Dosiereinheit zur dosierten Zuführung des mindestens einen Farbpigments aufweist; und/oder
(ii) die Zuführeinheit eine manuelle Zuführung der Schmelzklebstoffzusammensetzung und/oder des mindestens einen Farbpigments erlaubt oder eine solche Zuführung aufweist; oder
(iii) die Zuführeinheit eine gesteuerte Zuführung der Schmelzklebstoffzusammensetzung und/oder des mindestens einen Farbpigments erlaubt oder eine solche Zuführung aufweist; und/oder
(iv) die Konfektionierungseinheit eine gesteuerte Zuführung der Schmelzklebstoffzusammensetzung und/oder des mindestens einen Farbpigments erlaubt oder eine solche Zuführung aufweist; und/oder
(v) die Zuführeinheit und/oder die Konfektionierungseinheit zumindest eine Pumpe umfasst, welche eine kontinuierliche Zuführung oder Förderung der Schmelzklebstoffzusammensetzung bewirkt; und/oder
(vi) die Zuführeinheit und/oder die Konfektionierungseinheit eine Pumpe umfasst, welche eine kontinuierliche oder diskrete Zuführung des mindestens einen Farbpigments bewirkt; und/oder
(vii) die Konfektionierungseinheit eine Mischvorrichtung, vorzugsweise mit einer Mischkammer aufweisend ein statisches oder dynamisches Mischmittel, aufweist zum Mischen der Schmelzklebstoffzusammensetzung und/oder des mindestens einen Farbpigments; und/oder
(viii) die Konfektionierungseinheit eine Verteilvorrichtung aufweist zum verteilten Einlassen der Schmelzklebstoffzusammensetzung und/oder des mindestens einen Farbpigments in die Mischkammer; und/oder
die Auftragseinheit Mittel zum Auftragen des Klebstoffs aufweist, vorzugsweise eine Düse und/oder eine Auftragswalze; und/oder
die Auftragseinheit ein Reservoir aufweist zur Zwischenspeicherung einer definierten Menge des Klebstoffs, wobei das Reservoir optional als Zuführeinheit und Konfektionierungseinheit dient und die Mischung im Reservoir vorzugsweise aufgrund der Rotation der Auftragswalze erfolgt.

## Claims

1. A continuous method for the manufacture and application of an adhesive composition for adhesively bonding chipboards to an edge band,
**characterized in that**
(i) a hot-melt adhesive composition comprising at least one additive is continuously mixed with at least one color pigment to produce a manufactured adhesive;
(ii) the adhesive thus manufactured is continuously applied to a substrate, the substrate being a chipboard;
(iii) the substrate is adhesively bonded to a second substrate, the second substrate being an edge band,
**characterized in that** the at least one color pigment in step (i) is selected and added in a controlled manner such that the color of the adhesive thus manufactured is matched to the substrate to which the adhesive is applied in step (ii).

2. The method according to claim 1, **characterized in that** the hot-melt adhesive composition and/or the at least one color pigment in step (i) are dosed in in a controlled manner.

3. The method according to claim 1 or claim 2, **characterized in that** the hot-melt adhesive composition is
(i) a 1-component reactive adhesive system, which is preferably moisture-cross-linking; or
(ii) a physical curing thermoplastic adhesive system.

4. The method according to one of claims 1-3, **characterized in that** the manufacture and/or application of the adhesive takes place at an elevated temperature, in particular at a temperature above the melting point of the hot-melt adhesive composition

5. The method according to one of claims 1-5, **characterized in that** the at least one additive:
(i) is liquid at room temperature and comprises at least one polyol which is liquid at room temperature, at least one color pigment and optionally at least one reaction accelerator; or
(ii) is solid at room temperature and comprises at least one polyolefin which is solid at room temperature and at least one color pigment.

6. The method according to one of claims 1-5, **characterized in that** in the method a device is used, the device comprising:
- a supply unit,
- a manufacture unit,
- an application unit,
the supply unit being used to supply the hot-melt adhesive composition and/or the at least one color pigment,
the manufacture unit effecting both a continuous mixture of hot-melt adhesive composition with the at least one supplied color pigment to form the manufactured adhesive and a continuous delivery of the manufactured adhesive, the adhesive thus manufactured being delivered from the manufacture unit into the application unit and being applicable to a substrate by the application unit,
the supply unit and/or the manufacture unit having a heater

7. The method according to claim 6, **characterized in that**
(i) the supply unit has a dosing unit for the dosed supply of the hot-melt adhesive composition and/or the at least one color pigment, or the manufacture unit has a dosing unit for the dosed supply of the at least one color pigment; and/or
(ii) the supply unit allows a manual supply of the hot-melt adhesive composition and/or the at least one color pigment or has such a supply; or
(iii) the supply unit allows a controlled supply of the hot-melt adhesive composition and/or the at least one color pigment or has such a supply; and/or
(iv) the manufacture unit allows a controlled supply of the hot-melt adhesive composition and/or the at least one color pigment or has such a supply; and/or
(v) the supply unit and/or the manufacture unit comprises at least one pump which effects a continuous supply or delivery of the hot-melt adhesive composition; and/or
(vi) the supply unit and/or the manufacture unit comprises a pump which effects a continuous or discrete supply of the at least one color pigment; and/or
(vii) the manufacture unit comprises a mixing device, the mixing device preferably having a mixing chamber which has a static or dynamic mixing means, for mixing the hot-melt adhesive composition and/or the at least one color pigment; and/or
(viii) the manufacture unit has a distribution device for the distributed introduction of the hot-melt adhesive composition and/or the at least one color pigment into the mixing chamber; and/or
the application unit has means for applying the adhesive, preferably a nozzle and/or an application roller; and/or
the application unit has a reservoir for temporarily storing a defined quantity of the adhesive, the reservoir optionally being used as a supply unit and manufacture unit, and the mixing in the reservoir preferably taking place as a result of the rotation of the application roller.

## Revendications

1. Procédé continu pour la confection et l'application d'une composition adhésive pour le collage de panneaux de particules avec une bande de chant, **caractérisé en ce que**
(i) une composition adhésive thermofusible comprenant au moins un agrégat comportant au moins un pigment coloré est mélangée en continu pour produire un adhésif confectionné ;
(ii) l'adhésif ainsi confectionné est appliqué en continu sur un substrat, dans lequel le substrat est un panneau de particules ;
(iii) le substrat est collé à un second substrat, dans lequel le second substrat est une bande de chant,
**caractérisé en ce que** l'au moins un pigment coloré est sélectionné et ajouté de manière contrôlée à l'étape (i) de telle sorte que la couleur de l'adhésif ainsi confectionné est adaptée au substrat sur lequel il est appliqué à l'étape (ii).

2. Procédé selon la revendication 1, **caractérisé en ce que** la composition adhésive thermofusible et/ou l'au moins un pigment coloré sont dosés de manière contrôlée à l'étape (i).

3. Procédé selon la revendication 1 ou 2, **caractérisé en ce que** la composition adhésive thermofusible
(i) est un système d'adhésif réactif à un composant, de préférence réticulant par l'humidité ; ou
(ii) est un système d'adhésif thermoplastique à durcissement physique.

4. Procédé selon l'une des revendications 1 à 3, **caractérisé en ce que** la confection et/ou l'application de l'adhésif sont effectuées à une température élevée, en particulier à une température supérieure au point de fusion de la composition adhésive thermofusible

5. Procédé selon l'une des revendications 1 à 5, **caractérisé en ce que** l'au moins un agrégat :
(i) est liquide à température ambiante et comprend au moins un polyol liquide à température ambiante, au moins un pigment coloré et, éventuellement, au moins un accélérateur de réaction ; ou
(ii) est solide à température ambiante et comprend au moins une polyoléfine solide à température ambiante et au moins un pigment coloré.

6. Procédé selon l'une des revendications 1 à 5, **caractérisé en ce qu'**un dispositif est utilisé dans le procédé, lequel dispositif comprend :
- une unité d'acheminement,
- une unité de confection,
- une unité d'application,
dans lequel l'unité d'acheminement sert à acheminer la composition adhésive thermofusible et/ou l'au moins un pigment coloré,
dans lequel l'unité de confection provoque un mélange continu de la composition adhésive thermofusible avec l'au moins un pigment coloré acheminé pour former l'adhésif confectionné et un transport continu de l'adhésif confectionné, dans lequel l'adhésif ainsi confectionné est transporté depuis l'unité de confection dans l'unité d'application et peut être appliqué par l'unité d'application sur un substrat,
dans lequel l'unité d'acheminement et/ou l'unité de confection présentent un moyen de chauffage

7. Procédé selon la revendication 6, **caractérisé en ce que**
(i) l'unité d'acheminement présente une unité de dosage pour l'acheminement de manière dosée de la composition adhésive thermofusible et/ou de l'au moins un pigment coloré ou l'unité de confection présente une unité de dosage pour l'acheminement de manière dosée de l'au moins un pigment coloré ; et/ou
(ii) l'unité d'acheminement permet un acheminement manuel de la composition adhésive thermofusible et/ou de l'au moins un pigment coloré ou présente un tel moyen d'acheminement ; ou
(iii) l'unité d'acheminement permet un acheminement commandé de la composition adhésive thermofusible et/ou de l'au moins un pigment coloré ou présente un tel moyen d'acheminement ; et/ou
(iv) l'unité de confection permet un acheminement commandé de la composition adhésive thermofusible et/ou de l'au moins un pigment coloré ou présente un tel moyen d'acheminement ; et/ou
(v) l'unité d'acheminement et/ou l'unité de confection comprennent au moins une pompe qui provoque un acheminement ou un transport continu de la composition adhésive thermofusible ; et/ou
(vi) l'unité d'acheminement et/ou l'unité de confection comprennent une pompe qui provoque un acheminement continu ou discret de l'au moins un pigment coloré ; et/ou
(vii) l'unité de confection présente un dispositif de mélange, de préférence comportant une chambre de mélange présentant un moyen de mélange statique ou dynamique, pour le mélange de la composition adhésive thermofusible et/ou de l'au moins un pigment coloré ; et/ou
(viii) l'unité de confection présente un dispositif de répartition pour l'admission de manière répartie de la composition adhésive thermofusible et/ou de l'au moins un pigment coloré dans la chambre de mélange ; et/ou
l'unité d'application présente des moyens pour l'application de l'adhésif, de préférence une buse et/ou un rouleau d'application ; et/ou
l'unité d'application présente un réservoir pour le stockage intermédiaire d'une quantité définie de l'adhésif, dans lequel le réservoir sert éventuellement d'unité d'acheminement et d'unité de confection et le mélange est effectué dans le réservoir de préférence en raison de la rotation du rouleau d'application.
